# EUROPEAN PATENT SPECIFICATION

(11) **EP 0 843 118 B1**
(45) Date of publication and mention of the grant of the patent: **10.10.2001**
(21) Application number: 97203446.6
(22) Date of filing: 06.11.1997
(51) Int. Cl.: F16K 43/00

(54) **Radiator Valve**
Heizkörperventil
Robinet de radiateur.

(30) Priority: 14.11.1996 DE 19647028
(43) Date of publication of application: 20.05.1998
(73) Proprietor: Danfoss A/S, 6430 Nordborg (DK)
(72) Inventor: Bjerggaard, Niels, 8370 Hadsten (DK)
(74) Representative: Knoblauch, Ulrich, Dr.-Ing.

(56) References cited:
- EP-A- 0 684 417
- DE-A- 1 915 265
- US-A- 2 968 433
- US-A- 4 135 546
- US-A- 4 601 304

## Description

The invention relates to a radiator valve according to the preamble of claim 1.

Such a valve is known from the document DE 1915265.

It may be necessary from time to time to replace the stuffing box of such radiator valves, for example, because after a number of movements of the tappet the stuffing box becomes worn and leaky. To prevent a relatively large amount of water from escaping from the heating circulation during this replacement, it is known in the case of the Applicant's radiator valves to arrange a seal in a circumferential groove in the head part, the seal having a larger diameter than the housing bore. If the stuffing box is now unscrewed, under the action of a spring acting in the opening direction on the closing element and, if desired, also under the action of the pressure of the heating liquid, this seal bears against a housing end face which surrounds the housing bore, and thus seals off the housing bore. When a new stuffing box is screwed in, the head part is pressed inwards again, and the seal lifts away from the housing end face. In that case, however, the stuffing box has already taken over the sealing function again.

This additional sealing function of the head part has proved effective in many cases. A closing element of such a construction is relatively difficult to manufacture, however. Firstly, the head part has to be machined in order to provide a seat and a support for the seal. Secondly, the seal has to be mounted on the head part during assembly.

The invention is based on the problem of simplifying manufacture.

In a radiator valve of the kind mentioned in the introduction, that problem is solved by a valve according to claim 1.

There is thus no longer any need for a seal which is intended to prevent escape of heating liquid when replacing the stuffing box. On the contrary, this function is now performed by the head part itself. When the closing element is pressed away from the valve seat, the conical widening comes to bear against the edge of the housing bore and forms a seal there. Since the seal is no longer effected by a two-dimensional engagement of a seal against an end face, the risk of a leak occurring as a result of any tilting is also less. On the contrary, the cone of the head part is applied over its entire circumference, with the necessary pressure, against the axial edge of the housing bore. An edge thus meets a surface. Since the material of the head part will in many cases be somewhat softer than the material of the housing, the housing can here, if appropriate, dig into the head part a little. An excellent seal is achieved as a consequence. This applies also when the axial edge of the housing bore is not sharp-edged, but bevelled or rounded somewhat. Even then, the respective surface pressures that occur between the housing and the head part are large enough for a satisfactory seal to be achieved. The sealing effect is also achieved, however, when the material of the head part is as hard as or even harder than the material of the housing. Moreover, the construction has a further advantage: since the seal is no longer in the form of a separate component, in the event of faulty operation this seal cannot be washed away by escaping water, which would impair the operability of the radiator valve. Such a situation occasionally occurs where the differential pressures are large. As there is no longer a separate seal, this problem does not arise. The seal can no longer come out of the valve.

The cone preferably extends as far as the body. The cone, that is, the conical widening of the head part, then not only takes over the actual sealing function during removal and insertion of the stuffing box, but also transfers to the body the forces exerted by the tappet on the closing element. It is hereby relatively easy to achieve on the one hand a relatively large diameter of the closing element and the associated valve, and on the other hand to prevent to a large extent the occurrence of moments between the head part and the body. A relatively stable closing behaviour of radiator valve is therefore achieved.

In an especially advantageous practical form, the head part and the body are of one-piece construction. This facilitates assembly. Only a single part has to be handled.

Particularly when head part and body are together in the form of an injection moulded part, manufacture of the valve can be quite significantly simplified. Further preparation of the closing element is then only necessary to a very slight extent, if at all, and can in most cases be completely avoided.

The body advantageously has a sealing zone in which a sealing ring is arranged. The sealing ring then lies adjacent to the valve seat. Only there is it necessary for the sealing function to be fulfilled. The sealing material can therefore be restricted to an annular region in the sealing zone. The remaining parts of the closing element can be made of other materials, especially harder materials, which have a greater stability against deformation. It is no longer necessary to make the entire closing element of the sealing material or to cover it therewith.

The sealing ring is preferably inserted in a groove on the circumference of the body and is supported at its rear side. The groove holds the sealing ring in place. The body supports the sealing ring at the same time at its rear side, that is, at the side remote from the valve seat, so that the required closing forces can be transferred to the sealing ring.

The housing bore preferably continues as an opening which is bounded by a cylinder wall, the cone having on its outside several projections having guide surfaces directed parallel to the cylinder wall. With this practical form the closing element can be centred in relation to the housing bore in which the cylindrical end of the head part engages. This facilitates assembly, because the closing element is automatically brought into the correct alignment without additional manipulation. Because merely projections are provided, friction between the closing element and the housing can be kept low. This makes for a high reliability of the valve combined with minimal structural complexity. An adequate number of projections has to be provided, of course. For preference, at least three projections are used. An arrangement with four projections has also proved effective.

In that case it is especially preferred for the transition between the housing bore and the opening to be in the form of a conical envelope, the projections being correspondingly angled above the guide surface. The area with which the projections can be secured to the cone is therefore enlarged. The construction of the cone with projections therefore becomes more stable.

In an especially preferred practical form, provision is made for the cone to have several radially inwardly directed guide fingers, which leave free a central space into which a guide pin built into the housing projects. This guide pin is preferably of cylindrical construction. It is fixedly positioned in the housing. This need not mean that it is part of the housing. It may also have been fixed in the housing by auxiliary means. By this arrangement the position of the closing element in the housing is additionally stabilised. On the one hand, this enables the closing element to be guided more precisely in relation to the valve seat. In the present case it is nevertheless at least equally important that the additional sealing function of the cone can then be fulfilled with great reliability, because the guide pin is providing the appropriate guidance. The guide fingers can also be of plate-like construction, that is, can be in the form of triangles, if appropriate with projections, so that an improved stability of the closing element on the guide ring is achieved. This guidance is then effected in the axial direction always with a certain longitudinal extension. In that case it is especially preferred for the guide pin to act as support for a compression spring which biases the closing element towards the stuffing box. The spring is then supported by the guide fingers of the closing element, and is therefore unable to escape laterally. This is mainly relevant to assembly. In operation the spring ought not to touch the guide fingers, at any rate not over their length, but at the end. When the stuffing box is removed, the spring presses the cone directly against the housing.

The invention is described hereinafter with reference to preferred exemplary embodiments in conjunction with the drawings, in which:
- Fig. 1: shows a first embodiment of a radiator valve and
- Fig. 2: shows a second embodiment of a radiator valve as an angle valve.

A radiator valve 1 comprises a housing, which is formed by a housing body 2 and a housing cover 3. An inlet connection 4 and an outlet connection 5 are provided in the housing body 2. The flow path between the inlet connection 4 and the outlet connection 5 can be interrupted by the co-operation of a sealing zone 7 of a closing element 6 with a valve seat 8.

The valve seat 8 is arranged on an insert 9 constructed separately from the housing body 2 and the housing cover 3. The insert 9 is clamped between the housing body 2 and the housing cover 3. For that purpose a circumferential wall 10, inclined with respect to the centre line 11, that is, with respect to the direction of movement of the closing element 6, is provided in the housing body 2. This wall 10 therefore forms a longitudinal section of a conical envelope. The insert 9 lies adjacent to this wall 10, with a sealing ring 37 between it and the wall.

The insert has several feet 12, in this particular case three, with which it stands on the housing cover 3. The feet 12 leave between them sufficient space for water to penetrate without significant resistance into the inside of the insert 9. The feet 12 can also be used as guide means. The housing cover 3 has a circumferential projection 13 which guides the feet 12 of the insert 9 radially. Even if a certain freedom of movement can be allowed here, this construction enables the insert 9 to be positioned with relatively good accuracy in the valve as the radiator valve 1 is being assembled.

On the insert 9 there are furthermore provided holding arms 16 which extend radially inwards. In this particular case, these holding arms 16 are formed by a continuation of the feet 12 radially inwards and upwards. The holding arms 16 support in the middle a guide pin 17, which thus passes through the valve seat 8. The holding arms 16 are arranged in a star shape, so that an opening sufficiently large for the water to pass through remains between them. The guide pin 17 extends for a predetermined length in the direction of the axis 11.

The closing element 6 is guided on the guide pin 17.

The closing element 6 comprises a head part 18 and a body 19. The sealing zone 7 is arranged on the body 19. For that purpose the body has a circumferential groove 20 into which a sealing ring 21 is inserted. On the side remote from the valve seat 8 the sealing ring 21 is supported by a circumferential wall 22. The sealing ring 21 serves on the one hand, of course, to form a seal. It is also useful, however, for compensating for inaccuracies which occur during manufacture of the different parts.

When the valve is used under relatively high pressures, it can be worthwhile to hold the sealing ring 21 more firmly on the closing element 6. This can be effected, for example, by vulcanising the sealing ring 21 into the closing element or by casting a reinforcing element into the sealing ring. Finally, the wall 22 may also have through-going holes through which corresponding projections of the sealing ring 21 can engage. When the sealing ring 21 is moulded integrally with the closing element 6, the sealing ring 21 can have parts on both sides of the wall 22.

The head part 18 projects with a cylindrical portion 23 into a housing bore 24. A tappet 25 which is guided through a stuffing box 26 also projects into this housing bore 24. The closing element 6 lies with its cylindrical portion 23 or, more accurately, with a recess 27 in the end face thereof, adjacent to the tappet 25. In operation the tappet is adjusted in known manner not explained in more detail by a radiator thermostat top part or other operating element.

The cylindrical portion 23 has a smaller diameter than the housing bore 24. Beyond the housing bore 24 the head part 18 widens conically, however. The cone 28 thus formed then has a larger diameter than the housing bore 24. It (the cone) joins the head part 18 to the body 19, so that the entire closing element 6 is in the form of a cone 28 or cone with a cylindrical extension 23 at the top, and a circumferential edge, which forms the body 19, at the bottom.

The housing bore 24 widens to an opening 29, the transition being formed by a conical envelope 30. On the outside of the cone 28, distributed in the circumferential direction, there are several projections 31, whose outer wall runs parallel to the outer wall of the opening 29, that is, parallel to the axis 11. As the closing element 6 moves parallel to the axis 11, these projections 31 together with the wall of the opening 29 provide a certain guidance, which above all facilitates assembly. The closing element 6 can be mounted generally centrally in the opening 29 without additional measures. The projections 31 have on their top side a bevel 36, which fits into the space bounded by the conical envelope 30. Thus, on the one hand, a relatively large area of contact between the projections 31 and the wall of the cone 28 is ensured, and, on the other hand, the movement of the closing element 6 parallel to the axis 11 is not appreciably restricted by these projections.

Inside the cone 28, several plate-like guide fingers 32 are provided, which extend radially inwards and leave free a space 33 in which the guide pin 17 is arranged. The guide fingers 32 therefore support the closing element 6 radially on the guide finger 17 and thus allow only movement in the axial direction and, theoretically, a rotational movement of the closing element with respect to the valve seat 8.

In the opening 33 there is also arranged a compression spring 34, which is compressed between the guide pin 17 and the closing element 6 or, more accurately, a bearing surface 35 formed thereon. For improved centring of the compression spring 34 on the guide pin 17, this can also be provided in a manner not shown with an axial guide projection, which projects into the compression spring 34 and whose outer diameter corresponds to the internal diameter of the compression spring 34.

The insert 9 and the closing element 6 can be manufactured as injection moulded parts from plastics material. The plastics material can in that case be selected so that it is softer than the material of the housing body 2 or of the housing cover 3, yet nevertheless has the necessary rigidity and dimensional stability. The actual sealing function in the closing zone 7 is then ensured by the inserted sealing ring 21.

Such a valve can be made very simply and with few steps.

The closing element 6, the spring 34 and the insert 9 merely have to be inserted in succession into the housing body 2. The housing cover 3 can then be screwed on with a seal 14, for example, an O-ring, interposed. As a preliminary measure it is merely necessary to provide the closing element 6 with the sealing ring 21 and to provide the insert 9 with the sealing ring 37. Otherwise, centring of the parts is automatic by virtue of the fact that the closing element projects with its cylindrical portion 23 into the housing bore 24. The spring 34 is received in the opening 33 between the guide fingers 32. The guide pin 17 of the insert 9, which insert at the same time is centred at the wall 10, then also projects into this opening 33. A final positioning is provided by screwing in the housing cover 3. Finally, the stuffing box 26 can be screwed in, and the radiator valve 1 is finished.

This construction moreover has further advantages. When the stuffing box 26 is unscrewed once the valve has been installed, the compression spring 34 presses the closing element 6 away from the valve seat 8, namely, until the cone 28 comes to bear on the inner axial edge of the housing bore 24. An edge 38 is formed there, which forms a good seal with the wall of the cone 28. If desired, this edge 38 can dig slightly into the material of the cone 28. Additional seals are not necessary here, which on the one hand simplifies construction and on the other hand increases operational reliability.

Furthermore, it is of great advantage that the closing element 6 can now be better aligned and centred on the valve seat 8. The closing element is, in fact, held exactly where the forces of the through-flowing liquid acting on the closing element 6 act. In the case of conventional valves, the closing element is held at a certain distance from the valve seat, so that here moments were able to act on the closing element, which under unfavourable circumstances could lead to a tendency to oscillate and thus to noise of the valve. The improved mounting option therefore enables an improved operational behaviour to be achieved at the same time. Guidance is further assisted by the projections 31 co-operating with the opening 29. During assembly and also in operation this relatively simple measure enables the closing element 6 to remain with its sealing ring 21 virtually always parallel to the valve seat 8.

In the region of the stuffing box 26, a retaining means for an operating element, for example, a thermostat top part (not illustrated), is provided on the outside of the housing body 2. Since during assembly the housing cover 3 is rotated, the retaining means keeps its preset alignment so that the operating element can always be mounted in the correct orientation. This advantageous effect can easily be realised by assembling the valve "from below".

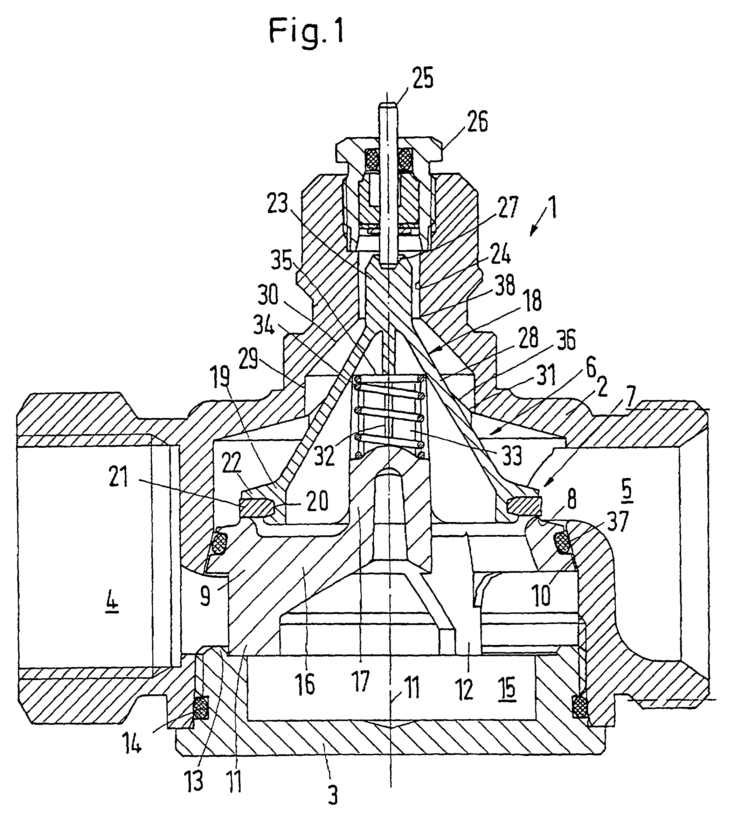

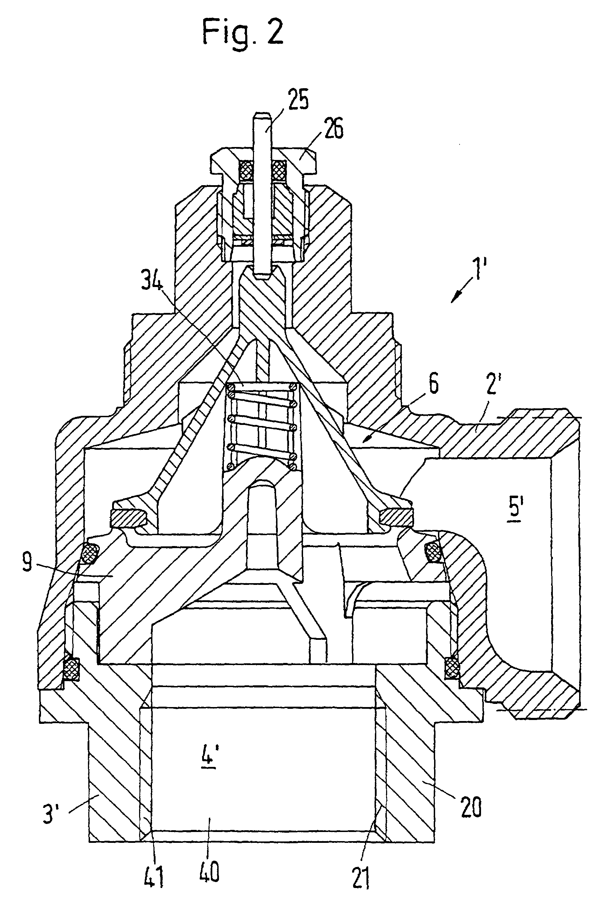

Fig. 2 shows a modified form of a radiator valve 1', whose "internal workings" are of the same construction as in the embodiment according to Fig. 1. In order to explain the simple construction, only the main parts have been provided with reference numbers, that is, the closing element 6, the spring 34 and the insert 9.

In the present case the form of the housing body 2' and of the housing cover 3' has changed. The radiator valve 1' shown in Fig. 2 is in the form of an angle valve, that is, the inlet connection 4 and the outlet connection no longer lie on a line, as in the embodiment shown in Fig. 1. On the contrary, the inlet connection 4' and the outlet connection 5' lie at an angle of 90° to one another.

To accomplish this by simple means, in the housing cover there is provided a bore 40 which has an internal thread 41. The corresponding heating liquid inlet can thus be attached here. Apart from an internal thread 21, other connection options are also feasible, of course.

Apart from the inlet and outlet connections 4, 4', 5, 5', both housing bodies 2, 2' have merely cylindrical or conical chambers, whose diameter enlarges outwards. These openings or bores can therefore be made using relatively simple tools.

The housing cover 3' shown in Fig. 2 could also be used in the case of a valve 1 according to Fig. 1. The valve would then be a three-way valve.

## Claims

1. Radiator valve having a housing (2, 3), a valve seat (8), a closing element (6) which comprises a head part (18) and a body (19), and a tappet (25) adjustable by means of an operating element, particularly a radiator thermostat top part, which tappet (25) passes through a stuffing box (26) and lies adjacent to the head part (18), which projects into a housing bore (24), into which also the tappet (25) projects, **characterised in that** the head part (18) widens conically beyond the diameter of the housing bore (24) and, when the closing element (6) is pressed away from the valve seat (8), comes to bear against the edge of the housing bore forming a seal by an edge meeting a surface.

2. Valve according to claim 1, **characterised in that** the cone (28) extends as far as the body (19).

3. Valve according to claim 1 or 2, **characterised in that** the head part (18) and the body (19) are of one-piece construction.

4. Valve according to claim 3, **characterised in that** the head part (18) and body (19) are together in the form of an injection moulded part.

5. Valve according to any one of claims 1 to 4, **characterised in that** the body (19) has a sealing zone (7) in which a sealing ring (21) is arranged.

6. Valve according to claim 5, **characterised in that** the sealing ring (21) is inserted in a groove (20) on the circumference of the body (19) and is supported at its rear side.

7. Valve according to any one of claims 1 to 6, **characterised in that** the housing bore (24) continues as an opening (29) which is bounded by a cylinder wall, and the cone (28) has on its outside several projections (31) having guide surfaces directed parallel to the cylinder wall.

8. Valve according to claim 7, **characterised in that** the transition between the housing bore (24) and the opening (29) is in the form of a conical envelope (30), the projections (31) being correspondingly angled above the guide surface.

9. Valve according to any one of claims 1 to 8, **characterised in that** the cone (28) has inside it several radially inwardly directed guide fingers (32), which leave free a central space (33) into which a guide pin (17) built into an insert (16) in the housing (2, 3) projects.

10. Valve according to claim 9, **characterised in that** the guide pin (17) acts as support for a compression spring (34) which biases the closing element (6) towards the stuffing box (26).

## Patentansprüche

1. Heizkörperventil mit einem Gehäuse (2, 3), einem Ventilsitz (8), einem Schließelement (6), das ein Kopfstück (18) und einen Körper (19) aufweist, und einem Stößel (25), der von einem Betätigungselement, insbesondere einem Heizkörperthermostataufsatz, einstellbar ist, welcher Stößel (25) durch eine Stopfbuchse (26) geführt ist und an dem Kopfstück (18) anliegt, das in eine Gehäusebohrung (24) hineinragt, in die auch der Stößel (25) ragt, **dadurch gekennzeichnet, daß** sich das Kopfstück (18) konusartig über den Durchmesser der Gehäusebohrung (24) hinaus erweitert und, wenn das Schließelement (6) vom Ventilsitz (8) weg gedrückt wird, zur Anlage an die Kante der Gehäusebohrung kommt und eine Dichtung bildet durch eine Kante, die eine Fläche trifft.

2. Ventil nach Anspruch 1, **dadurch gekennzeichnet, daß** sich der Konus (28) bis zu dem Körper (19) erstreckt.

3. Ventil nach Anspruch 1 oder 2, **dadurch gekennzeichnet, daß** das Kopfstück (18) und der Körper (19) einstückig ausgebildet sind.

4. Ventil nach Anspruch 3, **dadurch gekennzeichnet, daß** Kopfstück (18) und Körper (19) zusammen als Spritzgußteil ausgebildet sind.

5. Ventil nach einem der Ansprüche 1 bis 4, **dadurch gekennzeichnet, daß** der Körper (19) eine Dichtungszone (7) aufweist, in der ein Dichtring (21) angeordnet ist.

6. Ventil nach Anspruch 5, **dadurch gekennzeichnet, daß** der Dichtring (21) in eine Nut (20) am Umfang des Körpers (19) eingelegt und auf seiner Rückseite , abgestützt ist.

7. Ventil nach einem der Ansprüche 1 bis 6, **dadurch gekennzeichnet, daß** die Gehäusebohrung (24) in eine Ausnehmung (29) übergeht, die von einer Zylinderwand begrenzt ist, und daß der Konus (28) auf seiner Außenseite mehrere Vorsprünge (31) mit parallel zur Zylinderwand gerichteten Führungsflächen aufweist.

8. Ventil nach Anspruch 7, **dadurch gekennzeichnet, daß** der Übergang zwischen der Gehäusebohrung (24) und der Ausnehmung (29) als Kegelmantelfläche (30) ausgebildet ist, wobei die Vorsprünge (31) oberhalb der Führungsfläche entsprechend abgeschrägt sind.

9. Ventil nach einem der Ansprüche 1 bis 8, **dadurch gekennzeichnet, daß** der Konus (28) in seinem Innern mehrere radial einwärts gerichtete Führungsfinger (32) aufweist, die einen Mittelraum (33) frei lassen, in dem ein Führungsstift (17) hineinragt, der in einem Einsatz (16) im Gehäuse (2, 3) gebildet ist.

10. Ventil nach Anspruch 9, **dadurch gekennzeichnet, daß** der Führungsstift (17) als Abstützung für eine Druckfeder (34) dient, die das Schließelement (6) in Richtung auf die Stopfbuchse (26) belastet.

## Revendications

1. Robinet de radiateur comportant un boîtier (2, 3), un siège de vanne (8), un élément de fermeture (6) qui comprend une partie de tête (18) et un corps (19), et un boisseau (25) réglable au moyen d'un élément d'actionnement, en particulier une partie supérieure de thermostat de radiateur, lequel boisseau (25) traverse une boîte de presse-étoupe (26) et est situé au voisinage de la partie de tête (18), qui fait saillie dans un perçage (24) du boîtier, dans lequel le boisseau (25) fait également saillie, **caractérisé en ce que** la partie de tête (18) s'élargit avec une formé conique au-delà de la circonférence du perçage (24) du boîtier et, lorsque l'élément de fermeture (6) est écarté du siège de vanne (8), vient s'appliquer contre le bord du perçage du boîtier pour former une étanchéité au moyen d'un bord qui rencontre une surface.

2. Robinet selon la revendication 1, **caractérisé en ce que** le cône (28) s'étend aussi loin que le corps (19).

3. Robinet selon la revendication 1 où 2, **caractérisé en ce que** la partie de tête (18) et le corps (19) forment une structure monobloc.

4. Robinet selon la revendication 3, **caractérisé en ce que** la partie de tête (18) et le corps (19) sont réalisés conjointement sous la forme d'une pièce moulée par injection.

5. Robinet selon l'une quelconque des revendications 1 à 4, **caractérisé en ce que** le corps (19) comporte une zone d'étanchéité (7), dans lequel est disposée une bague d'étanchéité (21).

6. Robinet selon la revendication 5, **caractérisé en ce que** la bague d'étanchéité (21) est insérée dans une gorge (20) formée dans la circonférence du corps (19) et est supportée sur son côté arrière.

7. Robinet selon l'une quelconque des revendications 1 à 6, **caractérisé en ce que** le perçage (24) du boîtier est continu sous la forme d'une ouverture (29), qui est délimitée par une paroi cylindrique, et le cône (28) possède, sur son côté extérieur, plusieurs parties saillantes (31) possédant des surfaces de guidage dirigées parallèlement à la paroi cylindrique.

8. Robinet selon la revendication 7, **caractérisé en ce que** la transition entre le perçage (24) du boîtier et l'ouverture (29) se présente sous la forme d'une enveloppe conique (30), les parties saillantes (31) étant inclinées de façon correspondante au-dessus de la surface de guidage.

9. Robinet selon l'une quelconque des revendications 1 à 8, **caractérisé en ce que** le cône (28) possède intérieurement plusieurs doigts de guidage (32) dirigés radialement vers l'intérieur, qui laissent dégagé un espace central (33) dans lequel pénètre une broche de guidage (17) solidaire d'un insert (16) dans le boîtier (2, 3).

10. Robinet selon la revendication 9, **caractérisé en ce que** la broche de guidage (17) agit en tant que support pour un ressort de pression (34), qui sollicite l'élément de fermeture (6) en direction de la boîte de presse-étoupe (26).
